# EUROPÄISCHE PATENTSCHRIFT

(11) **EP 1 228 839 B1**
(45) Veröffentlichungstag und Bekanntmachung des Hinweises auf die Patenterteilung: **28.02.2007**
(21) Anmeldenummer: 02000492.5
(22) Anmeldetag: 09.01.2002
(51) Int. Cl.: B23Q 5/28, B23Q 1/28, B23Q 1/52, B23Q 1/54, B23Q 5/04, F16D 49/14, H02K 7/102

(54) **Antriebskopf für NC-gesteuerte Stellbewegungen einer Werkzeugspindel oder eines Werkstücktisches um mindestens eine Drehachse**
Driving head for the numerically controlled positioning of a tool spindle or of a worktable around at least one axis
Tête d'entraînement pour le positionnement à commande numérique d'une broche porte-outil ou d'une table porte-pièce autour d'au moins un axe de rotation

(30) Priorität: 02.02.2001 DE 10104669
(43) Veröffentlichungstag der Anmeldung: 07.08.2002
(73) Patentinhaber: Klement, Klaus-Dieter, 28570 Norderfriedrichskoog (DE)
(72) Erfinder: Klement, Klaus-Dieter, 28570 Norderfriedrichskoog (DE)
(74) Vertreter: Albrecht, Rainer Harald

(56) Entgegenhaltungen:
- EP-A- 0 537 546
- DE-A- 4 122 711
- US-A- 4 630 509

## Beschreibung

Die Erfindung betrifft einen Antriebskopf für NC-gesteuerte Stellbewegungen einer Werkzeugspindel mit zwei Drehachsen, einem Gehäuse und einem zweiten Antriebsgehäuse, wie aus der US-A-4630509 bekannt.

Aus WO 96/41695 ist ein als Gabelkopf ausgebildeter zweiachsiger Antriebskopf mit Direktantrieben bekannt. Die Antriebe sind als Innenläufermotoren ausgebildet, deren mehrteilig ausgebildete Rotoren durch in Achsrichtung verstellbare Nut/Feder-Elemente blockierbar sind. Die bekannte Ausführung ist nicht frei von Nachteilen. So ist bei einem kompakten Aufbau des Antriebskopfes der Durchlass für Medienleitungen, die an eine zwischen den Gabelarmen schwenkbar gelagerte Werkzeugspindel angeschlossen sind, klein. Ferner erfüllt das bauartbedingt erreichbare Antriebsmoment nicht in vollem Umfange die in der Praxis gestellten Anforderungen. Auch die Blockierung des Rotors in vorgegebenen Positionen ist noch nicht befriedigend gelöst.

In DE 41 22 711 A1 ist eine Klemmvorrichtung für eine Antriebswelle beispielsweise an einem Schrittschalttisch oder an einer Schrittschaltvorrichtung einer NC-Werkzeugmaschine beschrieben, die eine fluidbeaufschlagte Klemmhülse aufweist. Die Klemmhülse ist radial verformbar und an die Umfangsfläche der Antriebswelle andrückbar. Ferner ist für die Werkstückspindel einer Drehmaschine eine Festhaltevorrichtung bekannt, die einen in Richtung der Spindelachse biegeelastischen und gegen eine plane Fläche des Spindelgehäuses anpressbare Bremsscheibe aufweist (DE 195 22 711 C2; EP 0 749 803 A1).

Der Erfindung liegt die Aufgabe zugrunde, einen Antriebskopf für NC-gesteuerte Stellbewegungen anzugeben, der sich durch einen einfachen und kompakten Aufbau auszeichnet und präzise Stellbewegungen mit hohem Antriebsmoment ermöglicht.

Gegenstand der Erfindung und Lösung dieser Aufgabe ist ein Antriebskopf für NC-gesteuerte Stellbewegungen einer Werkzeugspindel gemäß Anspruch 1.

Die Ausführung zeichnet sich durch einen sehr einfachen Aufbau aus. Durch die Verwendung einer deformierbaren Membran, die sich am gesamten Umfange des Rotorjoches flächig an das Rotorjoch anlegt, sind hohe Haltekräfte erreichbar. Die Membran ist zweckmäßig mit Spannringen im Gehäuse befestigt, wobei ein Fluidraum zwischen der Membran und dem Gehäuse mit Dichtungen, die in den von den Spannringen überfassten Randabschnitten angeordnet sind, abgedichtet ist.

Da der Antriebskopf zwei Drehachsen aufweist, ist um jede Drehachse mindestens ein Außenläufermotor mit einem ringförmigen Rotorjoch angeordnet, welches zwischen dem Stator des Außenläufermotors und einem Gehäuseabschnitt mit einer auf das Rotorjoch wirkende Blockiereinrichtung angeordnet ist. Der Stator des konzentrisch zur zweiten Drehachse angeordneten Außenläufermotors ist in einem zweiten Antriebsgehäuse angeordnet, das an den Rotor des um die erste Drehachse angeordneten Aüßenläufermotors fest angeschlossen ist. Das zweite Antriebsgehäuse kann als Winkelkopfstück ausgebildet sein. Ferner kann das zweite Antriebsgehäuse als zweiarmiger Gabelkopf ausgebildet werden, in dessen Gabelarmen synchron betriebene Außenläufermotoren in einer Drehachse angeordnet sind. An die Rotoren der in den Gabelarmen angeordneten Außenläufermotoren ist eine motorbetriebene Werkzeugspindel anschließbar.

Im Folgenden wird die Erfindung anhand einer lediglich ein Ausführungsbeispiel darstellenden Zeichnung erläutert. Es zeigen schematisch
- Fig. 1: einen Längsschnitt durch einen Antriebskopf für NC-gesteuerte Stellbewegungen einer Werkzeugspindel, in der Bauform eines zweiachsigen Winkelkopfes,
- Fig. 2: ebenfalls im Längsschnitt einen Antriebskopf für NC-gesteuerte Stellbewegungen einer Werkzeugspindel, in der Bauform eines zweiachsigen Gabelkopfes.

Die in den Figuren dargestellten Vorrichtungen weisen ein Gehäuse 1, 1' und konzentrisch um zwei Drehachsen A, B angeordnete, mehrpolige Außenläufermotoren 2 auf, die jeweils ein in das Gehäuse 1, 1' eingesetzten ringförmigen weichmagnetischen Stator 3 mit Einzelpolwicklungen sowie einem mit Permanentmagneten 4 belegtes ringförmiges Rotorjoch 5 aufweisen. Das Rotorjoch 5 ist endseitig an einen im Gehäuse 1, 1' drehbar gelagerten Rotorkörper 6 angeschlossen und ist zwischen dem Stator 3 und einem zylindrischen Gehäuseabschnitt angeordnet, der eine Einrichtung 7 zum Blockieren des Rotorjoches 5 aufweist. Die Einrichtung 7 zum Blockieren des Rotorjoches besteht aus einer fluidbeaufschlagten, deformierbaren Membran 8, die sich unter Fluiddruck an das Rotorjoch 5 anlegt. Den Figuren entnimmt man, dass die Membranen 8 mit Spannringen 9, 10 im Gehäuse befestigt sind und dass ein Fluidraum 11 zwischen der Membran 8 und dem Gehäuse 1, 1' mit Dichtungen 12, die in den von den Spannringen 9, 10 überfassten Randabschnitten angeordnet sind, abgedichtet ist.

Die in den Ausführungsbeispiel dargestellten Antriebsköpfe weisen jeweils zwei Drehachsen A, B auf, wobei um jede Drehachse A, B mindestens ein Außenläufermotor 2 des zuvor beschriebenen Aufbaus angeordnet ist. Der Stator 3 des konzentrisch zur zweiten Drehachse B angeordneten Außenläufermotors ist in einem zweiten Antriebsgehäuse 1' angeordnet, das an den Rotor 6 des um die erste Drehachse A angeordneten Außenläufermotors fest angeschlossen ist.

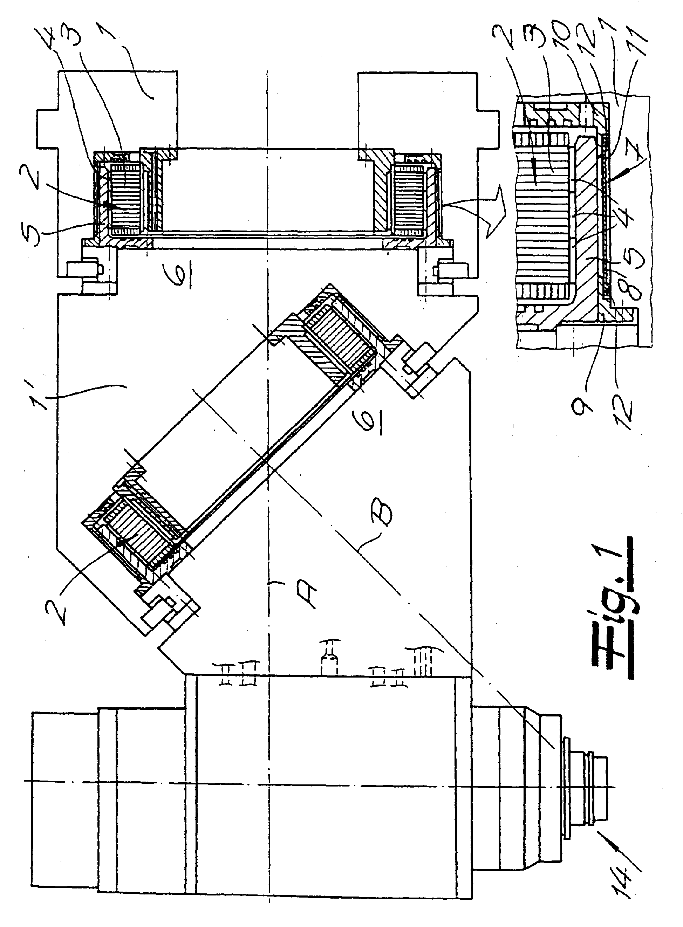

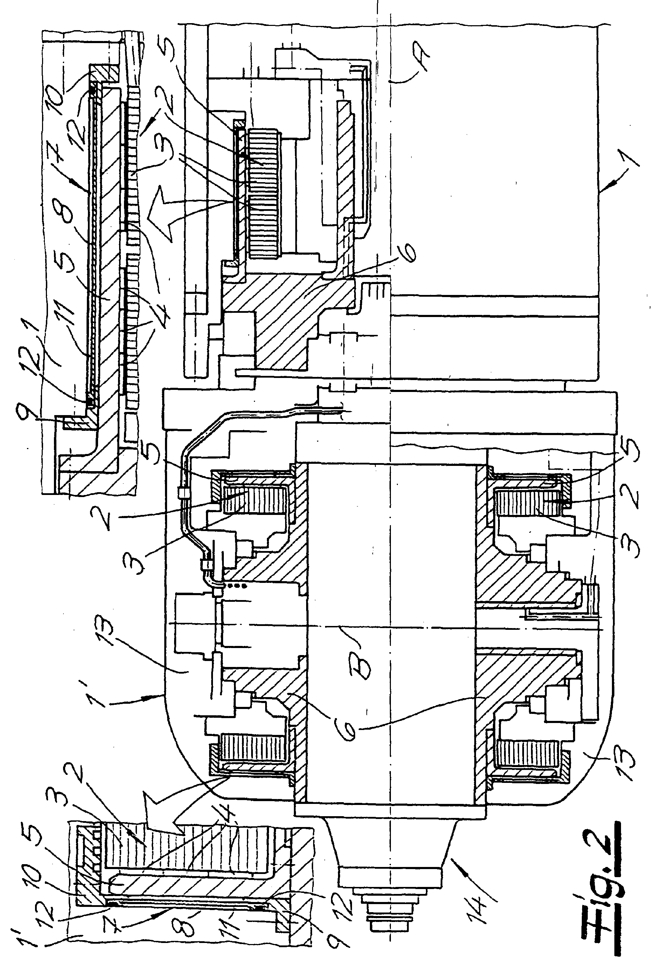

Im Ausführungsbeispiel der Fig. 1 ist das zweite Antriebsgehäuse 1' als Winkelkopfstück ausgebildet. Bei der in Fig. 2 dargestellten Ausführung ist das zweite Antriebsgehäuse 1' als zweiarmiger Gabelkopf ausgebildet, in dessen Gabelarmen 13 Außenläufermotoren 2 angeordnet sind. Die beiden, in den Gabelarmen 13 angeordneten Außenläufermotoren 2 sind in der selben Drehachse B angeordnet und werden synchron betrieben. An die Rotoren 6 ist eine motorbetriebene Werkzeugspindel 14 angeschlossen, die hydraulische Werkzeugwechsel- und Spannvorrichtungen aufweist. Die Rotoren 6 der Außenläufermotoren 2 weisen groß dimensionierte Öffnungen für Mediendurchführungen auf.

## Patentansprüche

1. Antriebskopf für NC-gesteuerte Stellbewegungen einer Werkzeugspindel mit zwei Drehachsen (A, B), einem Gehäuse (1) und einem zweiten Antriebsgehäuse (1'), **dadurch gekennzeichnet daß** um jede Drehachse (A, B) mindestens ein mehrpoliger Außenläufermotor (2) angeordnet ist, der einen in das Gehäuse (1) oder in das zweite Antriebsgehäuse (1') eingesetzten ringförmigen weichmagnetischen Stator (3) mit Einzelpolwicklungen sowie ein mit Permanentmagneten (4) belegtes ringförmiges Rotorjoch (5) aufweist, daß das Rotorjoch (5) endseitig an einen im Gehäuse (1) oder im zweiten Antriebsgehäuse (1') drehbare gelagerten Rotorkörper (6) angeschlossen ist, daß das Rotorjoch (5) ferner zwischen dem Stator (3) und einem Gehäuseabschnitt mit einer auf Rotorjoch (5) wirkenden Blockiereinrichtung (7) angeordnet ist, die aus einer fluidbeaufschlagten, deformierbaren Membran (8) besteht, welche sich unter Fluiddruck an das Rotorjoch (5) anlegt, und daß der Stator (3) des konzentrisch zur zweiten Drehachse (B) angeordneten Außenläufermotors (2) in dem zweiten Antriebsgehäuse (1') angeordnet ist, das an den Rotor (6) des um die erste Drehachse angeordneten Außenläufermotors (2) fest angeschlossen ist.

2. Antriebskopf nach Anspruch 1, wobei die Membran (8) mit Spannringen (9, 10) im Gehäuse (1, 1') befestigt ist und wobei ein Fluidraum (11) zwischen der Membran (8) und dem Gehäuse (1, 1') mit Dichtungen (12), die in den von den Spannringen (9, 10) überfassten Randabschnitten angeordnet sind, abgedichtet ist.

3. Antriebskopf nach Anspruch 1 oder 2, wobei das zweite Antriebsgehäuse (1') als Winkelkopfstück ausgebildet ist.

4. Antriebskopf nach Anspruch 1 oder 2, wobei das zweite Antriebsgehäuse (1') als zweiarmiger Gabelkopf ausgebildet ist, in dessen Gabelarmen (13) synchron betriebene Außenläufermotoren (2) in einer Drehachse (B) angeordnet sind, und wobei an die Rotoren (6) der in den Gabelarmen (13) angeordneten Außenläufermotoren (2) eine motorbetriebene Werkzeugspindel (14) angeschlossen ist.

## Claims

1. A drive head for NC-controlled adjusting movements of a tool spindle comprising two axes of rotation (A, B), a housing (1) and a second drive housing (1'), **characterised in that** at least one multipole external-rotor motor (2) is disposed about each axis of rotation (A, B), said motor comprising an annular soft-magnetic stator (3) with single-pole windings inserted in the housing (1) or in the second drive housing (1') as well as an annular rotor yoke (5) covered with permanent magnets (4), **in that** the rotor yoke (5) is connected at the end to a rotor body (6) mounted rotatably in the housing (1) or in the second drive housing (1'), **in that** the rotor yoke (5) is further disposed between the stator (3) and a housing section with a blocking device (7) acting on the rotor yoke (5), said blocking device comprising a deformable membrane (8) which is acted upon by fluid and which abuts against the rotor yoke (5) under fluid pressure, and **in that** the stator (3) of the external-rotor motor (2) disposed concentrically to the second axis of rotation (B) is arranged in the second drive housing (1') which is firmly connected to the rotor (6) of the external-rotor motor (2) disposed about the first axis of rotation.

2. The drive head according to claim 1, wherein the membrane (8) is fixed in the housing (1, 1') with clamping rings (9, 10) and wherein the fluid chamber (11) between the membrane (8) and the housing (1, 1') is sealed with seals (12) which are arranged in the edge sections embraced by the clamping rings (9, 10).

3. The drive head according to claim 1 or 2, wherein the second drive housing (1') is embodied as an angular head piece.

4. The drive head according to claim 1 or 2, wherein the second drive housing (1') is embodied as a two-armed fork crown in the fork arms (13) whereof synchronously operated external-rotor motors (2) are arranged in one axis of rotation (B) and wherein a motor-operated tool spindle (14) is connected to the rotors (6) of the external-rotor motors (2) arranged in the fork arms (13).

## Revendications

1. Tête motrice pour des déplacements débout d'une broche d'outil commandée par CN, avec deux axes de rotation (A, B), un boîtier (1) et un deuxième boîtier d'entraînement (1'), **caractérisée en ce que** autour de chaque axe de rotation (A, B) est disposé au moins un moteur multipolaire à induit extérieur (2) comportant un stator (3) annulaire magnétique doux avec des enroulements unipolaires, qui est inséré dans le boîtier (1) ou dans le deuxième boîtier d'entraînement (l'), ainsi qu'une culasse de rotor annulaire (5) équipée d'aimants permanents (4), **en ce que** côté extrémité, la culasse de rotor (5) est raccordée sur un corps de rotor (6) logé de façon rotative dans le boîtier (1) ou dans le deuxième boîtier d'entraînement (1'), **en ce que** par ailleurs, la culasse de rotor (5) est disposée entre le stator (3) et une section de boîtier avec un dispositif de blocage (7) agissant sur la culasse de rotor (5) qui consiste en une membrane déformable (8) soumise à un fluide, qui sous la pression du fluide s'applique contre la culasse de rotor (5), et **en ce que** le stator (3) du moteur à induit extérieur (2) disposé de façon concentrique au deuxième axe de rotation (B) est disposé dans le deuxième boîtier d'entraînement (1') qui est fixement raccordé sur le rotor (6) du moteur à induit extérieur (2) disposé autour du premier axe de rotation.

2. Tête motrice selon la revendication 1, la membrane (8) étant fixée dans le boîtier (1, 1') avec des bagues de serrage (9, 10) et l'étanchéité d'un espace à fluide (11) entre le membrane (8) et le boîtier (1, 1') étant assurée par des joints (12), qui sont disposés dans des sections de bordures encerclées par les bagues de serrage (9, 10).

3. Tête motrice selon la revendication 1 ou 2, le deuxième boîtier d'entraînement (11) étant conçu en tant que pièce de tête angulaire.

4. Tête motrice selon la revendication 1 ou 2, le deuxième boîtier d'entraînement (1') étant conçu en tant que tête de fourche à deux bras, dans les bras de fourche (13) de laquelle, des moteurs à induit extérieur (2) fonctionnant de façon synchrone sont disposés dans un axe de rotation (B) et une broche d'outil (14) actionnée par moteur étant raccordée sur les rotors (6) des moteurs à induit extérieur (2) disposés dans les bras de fourche (13).
